# EUROPEAN PATENT SPECIFICATION

(11) **EP 3 652 286 B1**
(45) Date of publication and mention of the grant of the patent: **13.10.2021**
(21) Application number: 18739542.1
(22) Date of filing: 11.07.2018
(51) Int. Cl.: C11D 3/00, C11D 1/65, G01N 21/78, G01N 21/94

(54) **METHOD FOR ASSESSING FABRIC CONDITIONER**
VERFAHREN ZUR BEURTEILUNG EINES WEICHSPÜLERS
PROCÉDÉ D'ÉVALUATION DE CONDITIONNEMENT DE TISSU

(30) Priority: 14.07.2017 WO PCT/CN2017/092971; 22.08.2017 EP 17187278
(43) Date of publication of application: 20.05.2020
(73) Proprietor: Unilever IP Holdings B.V., 3013 AL Rotterdam (NL); Unilever Global IP Limited, Wirral, CH62 AZD (GB)
(72) Inventor: BOARDMAN, Christopher, Wirral Merseyside CH63 3JW (GB); SHEN, Fan, Shanghai 200335 (CN); JOYCE, Susan, Barbara, Wirral Merseyside CH63 3JW (GB); XU, Danping, Shanghai 200335 (CN)
(74) Representative: Moore, Elizabeth Ellen
(86) International application number: PCT/EP2018/068854
(87) International publication number: WO 2019/012013

(56) References cited:
- WO-A1-00/17297
- PEI LIUJUN ET AL: "Study of Crystal Violet Hueing Dye Deposition on Fabrics During Home Laundry", JOURNAL OF SURFACTANTS AND DETERGENTS, SPRINGER, BERLIN, DE, vol. 19, no. 4, 7 May 2016 (2016-05-07), pages 795-801, XP035981831, ISSN: 1097-3958, DOI: 10.1007/S11743-016-1831-X [retrieved on 2016-05-07]
- Kuo-Yann Lai ET AL: "Chapter 12 - Fabric Softeners" In: "Liquid Detergents, second edition", 1 January 2006 (2006-01-01), CRC Press, XP055307205, ISBN: 978-0-8247-5835-6 pages 487-554, page 489, paragraph 2 - last paragraph page 501, paragraph 1 page 533, paragraph 6

## Description

### Field of the Invention

The present invention is in the field of assessing the neutralising effect of a fabric conditioning composition.

### Background of the Invention

Laundry detergent compositions can leave residues on fabrics. When these residues come into contact with the skin of a consumer, they can cause skin irritation.

WO 00/17297 discloses the use of cationic materials such as cationic fabric conditioning materials and compositions to reduce skin irritancy. There is disclosed methods of assessing the reduction of skin irritancy by a fabric conditioner. However, these methods either require human panellists willing to partake in patch tests or the ability to perform a titration in a laboratory environment.

A method is needed to make a quick and easy assessment, of the neutralising effect of a fabric conditioner.

### Summary of the Invention

A method of assessing the neutralising effect of a fabric conditioner, the method comprising the steps of:
a) Immersing a first piece or section of absorbent material in water comprising a laundry detergent composition, wherein the detergent composition comprises anionic surfactant;
b) Immersing the first piece or section of absorbent material in water comprising a fabric conditioning composition, wherein the fabric conditioning composition comprises a cationic surfactant;
c) Applying a cationic dye to the absorbent material; and
d) Assessing the colour of the absorbent material.

Wherein the fabric conditioner neutralises detergent residues.

Also disclosed is the use of the method, for demonstrating that a fabric conditioner neutralises detergent residues.

### Detailed Description of the Invention

These and other aspects, features and advantages will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Step a) Immersing in water comprising a laundry detergent composition

In the first step of the method the absorbent material or materials are immersed in water comprising a laundry detergent composition. Detergent composition comprise sufactants. The detergent composition used in the method comprises at least an anionic surfactant, preferably the compositon comprises nonionic surfactant and anionic surfactant.

The nonionic surfactant if present, preferably comprises alcohol ethoxylate. The alcohol ethoxylates are formed from the reaction of primary or secondary alcohols with ethylene oxide. Typicially an aliphatic C₈ to C₁₈ primary or secondary linear or branched alcohol is reacted with ethylene oxide in the required molar amount to produce the alcohol ethoxylate. Preferred alcohol ethoxylates have from 2 to 40, preferably from 3 to 30, more preferably from 5 to 20 ethylene oxide units attached to the aliphatic chain.

The surfactants may be chosen from the surfactants described in "Surface Active Agents" Vol. 1, by Schwartz Perry, Interscience 1949, Vol. 2 by Schwartz, Perry 20 5 Berch, Interscience 1958, in the current edition of "McCutcheon's Emulsifiers and Detergents" published by Manufacturing Confectioners Company or in "Tenside-Taschenbuch", H. Stache, 2nd Edn. , Carl Hauser Verlag, 1981. Preferably, the surfactants used are saturated.

Suitable nonionic detergent compounds which may be used include, in particular, the reaction products of compounds having a hydrophobic group and a reactive hydrogen atom, for example, aliphatic alcohols, acids, amides or alkyl phenols with alkylene oxides, especially ethylene oxide either alone or with propylene oxide. Specific nonionic detergent compounds are C₆ to C₂₂ alkyl phenol-ethylene oxide condensates, generally 5 to 25 EO, i.e. 5 to 25 units of ethylene oxide per molecule, and the condensation products of aliphatic C₈ to C₁₈ primary or secondary linear or branched alcohols with ethylene oxide, generally 5 to 40 EO.

Suitable anionic detergent compounds which may be used can be water-soluble alkali metal salts of organic sulphates and sulphonates having alkyl radicals containing from about 8 to about 22 carbon atoms, the term alkyl being used to include the alkyl portion of higher acyl radicals. Examples of suitable synthetic anionic detergent compounds are sodium and potassium alkyl sulphates, especially those obtained by sulphating higher C₈ to C₁₈ alcohols, produced for example from tallow or coconut oil, sodium and potassium alkyl C₉ to C₂₀ benzene sulphonates, particularly sodium linear secondary alkyl C₁₀ to C₁₅ benzene sulphonates; and sodium alkyl glyceryl ether sulphates, especially those ethers of the higher alcohols derived from tallow or coconut oil and synthetic alcohols derived from petroleum. The preferred anionic detergent compounds are sodium C₁₁ to C₁₅ alkyl benzene sulphonates and sodium C₁₂ to C₁₈ alkyl sulphates. Salts of sulphonates included as hydrotrobes can additionally be considered as anionic surfactants as defined herein. Also applicable are surfactants such as those described in EP-A-328 177 (Unilever), which show resistance to salting-out, the alkyl polyglycoside surfactants described in EP-A- 070 074, and alkyl monoglycosides.

The total amount of surfactant present in the laundry detergent composition may be from 5 to 40 wt. %. The surfactant level is preferably at least 6 wt. %, more preferably at least 10 wt. %, more preferably the total amount of surfactant is from 12.5 to 40 wt. %, preferably from 14 to 35 wt. %.

A preferred nonionic surfactant is C₁₂-C₁₅ alkyl chain with an average of 7 to 9 moles of ethoxylation.

Preferred anionic surfactants are: linear alkyl benezene sulphonates, sodium lauryl ether sulphonates with 1 to 3 moles (average) of ethoxylation, primary alkyl sulphonates, methyl ether sulphates and secondary alkyl sulphonates or mixtures thereof.

Other surfactants such as amphoteric, zwitterionic and cationic surfactants may also be present in addition to the aforementioned nonionic and anionic surfactants.

The laundry detergent composition added to the water may be in powder or liquid form and should be thoroughly mixed / dissolved in the water.

The concentration of laundry detergent in the water is preferably 2 to 20g per litre, more preferably 3 to 15g per litre, most preferably 3 to 10 g per litre.

When two or more pieces or sections of absorbent material are being compared, depending on the variable that the method is assessing, the detergent composition may be the same or different compositions. For example the effect of a particular fabric conditioner may be assed in relation to different laundry detergent compositions. Alternatively, the effect of different fabric conditioners may be assessed in relation to a particular laundry detergent composition.

Equally the concentration of laundry detergent may be different if assessing the effect of a fabric conditioner composition on different concentrations of a laundry detergent. Preferably the concentration of laundry detergent is the same for all pieces or sections of absorbent material used in the method.

When two or more pieces or sections of absorbent material are used in the method, and the laundry detergent composition is the same, the pieces or sections of absorbent material may be immersed in the same water comprising laundry detergent composition either simultaneously or consecutively.

A single piece of material may be immersed in water comprising detergent and then divided into two separate pieces for the remaining steps. E.g. cut in half and the two halves treated differently in the following method steps.

### Step b) Immersing in water comprising a fabric conditioning composition

In the second step of the method the first and optionally the second piece or section of absorbent material is immersed in water comprising a fabric conditioning composition. Fabric conditioning compositions comprise cationic softening actives.

A preferred cationic softening active for use in the method, are quaternary ammonium compounds (QAC). The preferred quaternary ammonium compounds for use in the method compositions of the present invention are the so called "ester quats" comprising an ester link. Particularly preferred materials are the ester-linked triethanolamine (TEA) quaternary ammonium compounds comprising a mixture of mono-, di- and tri-ester linked components. Most preferably, the ester-linked quaternary ammonium compound is an ester-linked triethanolamine quaternary ammonium compound comprising unsaturated fatty chains.

Typically, TEA-based fabric softening actives comprise a mixture of mono, di- and triester forms of the compound where the di-ester linked component comprises no more than 70 % by weight of the fabric softening compound, preferably no more than 60 %, e.g. 55%, or 45% of the fabric softening compound and at least 10 % of the monoester linked component, for example 11 % monoester. A preferred hardened type of active has a typical mono:di:tri ester distribution of from 18 to 22 monoester: from 58 to 62 diester: from 18 to 22 triester; for example 20:60:20. A soft TEA quat may have a typical mono:di:tri ester distribution of from 25 to 45 %, preferably from 30 to 40 % monoester: from 45 to 60 %, preferably from 50 to 55 % diester: and from 5 to 25 %, preferably from 10 to 15 % triester; for example 40:50:10.

A first group of quaternary ammonium compounds (QACs) suitable for use in the present method is represented by formula (I): 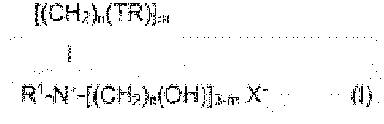 wherein each R is independently selected from a C5-35 alkyl or alkenyl group; R¹ represents a C₁₋₄ alkyl, C₂₋₄ alkenyl or a C₂₋₄ hydroxyalkyl group; T is generally 0-CO. (i.e. an ester group bound toRvia its carbon atom), but may alternatively be CO-0 (i.e. an ester group bound toRvia its oxygen atom); n is a number selected from 1 to 4; m is a number selected from 1, 2, or 3; and X is an anionic counter-ion, such as a halide or alkyl sulphate, e.g. chloride or methylsulphate. Di-esters variants of formula I (i.e. m = 2) are preferred and typically have mono- and tri-ester analogues associated with them.

Especially preferred agents are preparations which are rich in the di-esters of triethanolammonium methylsulfate, otherwise referred to as "TEA ester quats".

Commercial examples include Stepantex™ UL85, ex Stepan, Prapagen™ TQL, ex Clariant, and Tetranyl™AHT-1, ex Kao, (both di-[hardened tallow ester] of triethanolammonium methylsulphate), AT-1 (di-[tallow ester] of triethanolammonium methylsulphate), and L5/90 (di-[palm ester] of triethanolammonium methylsulphate), both ex Kao, and Rewoquat™ WE15 (a di-ester of triethanolammonium methylsulphate having fatty acyl residues deriving from C₁₀-C₂₀ and C₁₆-C₁₈ unsaturated fatty acids), ex Evonik. Also suitable are soft quaternary ammonium actives such as Stepantex VK90, Stepantex VT90, SP88 (ex-Stepan), Ceca Noramine, Prapagen TQ (ex-Clariant), Dehyquart AU-57 (ex-Cognis),Rewoquat WE18 (ex-Degussa) and Tetranyl L190 P, Tetranyl L190 SP and Tetranyl L190 S (all ex-Kao).

A second group of QACs suitable for use in the present method is represented by formula (II): 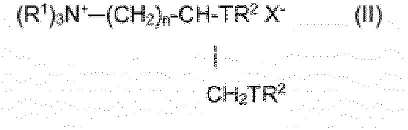 wherein each R¹ group is independently selected from C₁₋₄ alkyl, hydroxyalkyl or C₂₋₄ alkenyl groups; and wherein each R² group is independently selected from C₈₋₂₈ alkyl or alkenyl groups; and wherein n, T, and X are as defined above.

Preferred materials of this second group include 1,2 bis[tallowoyloxy]-3-trimethylammonium propane chloride, 1,2 bis[hardened tallowoyloxy]-3-trimethylammonium propane chloride, 1,2-bis[oleoyloxy]-3-trimethylammonium propane chloride, and 1,2 bis[stearoyloxy]-3-trimethylammonium propane chloride. Such materials are described in US 4, 137,180 (Lever Brothers). Preferably, these materials also comprise an amount of the corresponding mono-ester.

A third group of QACs suitable for use in the present method is represented by formula (III):

(R¹)₂-N⁺-[(CH₂)ₙ-T-R²]₂X⁻ (III)

wherein each R¹ group is independently selected from C₁₋₄ alkyl, hydroxyalkyl or C₂₋₄ alkenyl groups; and wherein each R² group is independently selected from C₈₋₂₈ alkyl or alkenyl groups; and n, T, and X are as defined above. Preferred materials of this third group include bis(2-tallowoyloxyethyl)dimethyl ammonium chloride and hardened versions thereof.

The iodine value of the quaternary ammonium fabric softening material is preferably from 0 to 80, more preferably from 0 to 60, and most preferably from 0 to 45. The iodine value may be chosen as appropriate. Soft, hard or partially hardened materials are all suitable for the present method.

Iodine value as used in the context of the present invention refers to, the fatty acid used to produce the QAC, the measurement of the degree of unsaturation present in a material by a method of nmr spectroscopy as described in Anal. Chem. , 34, 1136 (1962)Johnson and Shoolery.

A further type of softening compound may be a non-ester quaternary ammonium material represented by formula (IV): 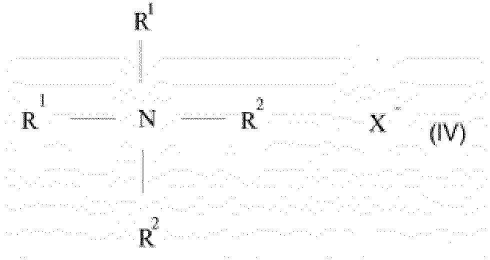 wherein each R' group is independently selected from C₁₋₄ alkyl, hydroxyalkyl or C₂₋₄ alkenyl groups; each each R² group is independently selected from C₈₋₂₈ alkyl or alkenyl groups, and X is as defined above.

The total amount of fabric softening active present in the fabric conditioning composition may be from 1 to 40 wt. %. The active level is preferably at least 3 wt. %, more preferably at least 4 wt. %, 25 More preferably the total amount of surfactant is from 2 to 25 wt. %, preferably from 4 to 18 wt. %.

The concentration of fabric conditioner in the water is preferably 10 to 100g of fabric conditioning composition per 1 litre of water, more preferably 20 to 75g of fabric conditioning composition per 1 litre of water, most preferably 30 to 60g per litre of water.

When two or more pieces or sections of absorbent material are being compared, depending on the variable that the method is assessing, the second and any consecutive pieces or sections of absorbent material may optionally be immersed in:
- the same fabric conditioning composition as the first piece or section of absorbent material at the same concentration;
- the same fabric conditioning composition as the first piece or section of absorbent material at a different concentration;
- a different fabric conditioning composition as the first piece or section of absorbent material at the same concentration; or
- water.

Alternatively a comparative piece or section of absorbent material may not be subjected to step b) of the method. The comparative may be immersed in the water comprising a detergent composition and then have the cationic dye applied, with no intermediate step.

### Step c) Applying cationic dye

A cationic dye is a dye that can be dissociated into positively charged ions in an aqueous solution. The dye may be any colour. Examples of classes of cationic dyes include, but are not limited to: azo dyes, triarylmethane dyes, anthraquinone dyes, heterocyclic compounds, methine dye, tris diphenylmethane dyes, and azomethine dyes.

Examples of cationic dyes include, but are not limited to: Methylene blue, Crystal violet, Methyl violet, Safranin O, Bismark brown Y, Toluidine blue, Thionine, Azure A, B or C

Particular preferably, for a clear result, the cationic dye is Toluidine blue.

The dye is preferably in an aqueous solution. The concentration of the dye in an aqueous solution is preferably 1 x 10⁻⁹ to 1 x 10⁻³ w.t. %, more preferably 1 x 10⁻⁸ to 1 x 10⁻⁴ w.t. %, most preferably 1 x 10⁻⁷ to 1 x 10⁻⁵ w.t. %. When two or more pieces or sections of absorbent material are used in the method, the same concentration of cationic dye should be applied to both.

The dye may be applied by any suitable method. Non-limiting examples of suitable methods include, immersion, spraying or dropping (e.g. with a pipette). Preferably the absorbent material is sprayed with an aqueous solution of cationic dye or immersed in an aqueous solution of cationic dye.

When two or more pieces of absorbent material are used in the method, the same amount of cationic dye should be applied to both or all pieces or sections of absorbent material. For example if the absorbent material is immersed in an aqueous solution of dye, then each piece or section should immersed for the same period of time. If the cationic dye is being sprayed, the same number of sprays should be directed at each piece or section of absorbent material.

### Step d) Assessing the colour

The assessment of colour may be done visually or using suitable apparatus.

Visual assessment may, for example be performed by comparing the colour of two pieces of absorbent material treated differently. Alternatively visual assessment may be performed by comparison to a colour chart or any other such point of reference.

Assessment by suitable apparatus may, for example be made using a spectrometer, for example a sphere spectrophotometer.

Preferably, the assessment method is visual.

A visual comparison between two or more pieces of absorbent material may be improved by placing the pieces of absorbent material on a dark surface.

The more intense the colour of the dye on the fabric, the less neutralised the absorbent material is. This indicates the presence of residues which can cause skin irritancy. The lighter the dye on the fabric, the fewer residues.

### Absorbent material

The absorbent material, may be any size or shape. The absorbent material may be a sheet of fabric or a 3-dimensional item such as a sponge. The absorbent material may be any shape, it may be preferred that the absorbent material is in the shape of an item of clothing, for example a t-shit, pair of trousers, jumper, underwear, shirt, dress etc. This provides a method with which consumers can identify with.

The absorbent material may be any material or mix of materials, however for best results, the material is preferably a synthetic material. When the absorbent material is a sheet of fabric, more preferably the material is selected from: acrylic, polyester or nylon. Most preferably the material polyester, the results are particularly prominent when polyester is used. When the absorbent material is a 3-dimensional item, the materials is preferably poly-urethane sponge.

When a comparison is being made, two or more pieces or sections of absorbent material will be used. A comparison may be made between two or more separate pieces of material, which have been treated differently or a comparison may be made between different sections of the same piece or absorbent material, the different sections having been treated differently.

Preferably, when a comparison is being made between two different compositions, the two pieces or sections of absorbent material are the same material, however if a comparison is desired for the effect of a fabric conditioner neutralising detergents on different types of fabrics, two different types of material may be used.

If the piece of absorbent material is a fabric, it will have a height and width. If the piece of absorbent material is 3-demensional, it will have a height, width and depth. A piece of absorbent material can be a variety of shapes, which do not have an obvious height, width or depth. Therefore the height is considered to be the maximum dimension in the y direction, the width is considered to be the maximum dimension in the x direction and the depth is considered to be the maximum dimension in the z direction. Preferably the height, width and where relevant the depth are between 1cm and 100cm, more preferably, between 5cm and 50cm, most preferably, between 8cm and 25cm.

If a comparison is being made between two pieces of absorbent material, preferably the pieces of absorbent material are roughly the same size, i.e. the difference between the height of the two pieces of absorbent material is less than 10cm, the difference between the width of the two pieces of absorbent material is less than 10cm and where relevant the difference between the depth of the two pieces of absorbent material is less than 10cm. More preferably, the difference in each dimension is less than 5cm and most preferably less than 2cm. In a most preferred embodiment the pieces of absorbent material are the same size, i.e. have the same dimensions.

Preferably, the absorbent material should be the same colour and a colour on which the dye is detectable. For example the L* value should preferably be between 60 and 100, more preferably 75 and 100, even more preferably 85 to 100 and most preferably 92 to 100. The L* value can be measured using a spectrometer, for example a sphere spectrophotometer.

The L* axis represents Lightness. This is vertical; from 0, which has no lightness (i.e. absolute black), at the bottom; through 50 in the middle, to 100 which is maximum lightness (i.e. absolute white) at the top.

### Additional method steps

Although the claimed method describes two pieces or sections of absorbent material, it is not intended to exclude a third and consecutive pieces or sections being treated according to the method steps and compared to the first two.

In each of the steps a), b) and c), immersion in the liquid compositions, may be for any period of time, i.e. the piece of absorbent material may be simply dipped in the liquid or it may be left to soak. When two or more pieces of absorbent material are used in the method, they are preferably immersed for the same period of time in corresponding steps i.e. both immersed in step a) for *x* period of time, both immersed in step b) for *y* period of time and both immersed in step c) for *z* period of time. Immersion times for the different steps (i.e. periods *x*, *y* and *z*) may be the same or different. For example periods *x*, *y* and z could all be 1 minute or alternatively, *x* could be 5 minutes, *y* could be 1 minute and *z* could be 10 seconds.

In each of steps a), b) and c), the pieces of absorbent material may be agitated in the liquid compositions.

In between each of the steps a) to d), the piece of absorbent material may be squeezed or rung out to remove excess liquid. For example:
- the piece or pieces of absorbent material are squeezed to remove excess liquid, between steps a) and b)
- the piece or pieces of absorbent material are squeezed to remove excess liquid, between steps b) and c)
- the piece or pieces of absorbent material are squeezed to remove excess liquid, between steps c) and d)

The method steps a) to d) may be carried out on one piece of absorbent material. Alternatively the method steps a) to d) may be carried out on two or more pieces or sections of absorbent fabric and a comparison made between them.

Preferably the method if carried out on more than one piece or sections of fabric. The resulting colour of the two or more pieces or sections of absorbent material can be compared. When testing multiple pieces or sections of absorbent material, the methods may be run consecutively or simultaneously, preferably simultaneously.

When comparing two or more pieces or sections of absorbent material, the method may be used to test fabric conditioner neutralisation in a number of different ways.

For example, by changing the type or concentration of the laundry detergent in step a) and keeping the type and concentration of fabric conditioner in step b) the same, the effect of fabric conditioner on different laundry detergents or different concentrations of laundry detergent may be compared.

Alternatively, by keeping the type and concentration of laundry detergent the same in step a), the effect of using a fabric conditioner vs no fabric conditioner, different types of fabric conditioners, of different concentrations of fabric conditioner may be assessed.

Preferably, when two or more pieces or sections of absorbent material are being compared, each corresponding step a) involves the same laundry detergent composition at the same concentration, with the pieces of absorbent material being immersed for the same period of time.

Preferably, in step b), the first piece or section of absorbent material is immersed in a fabric conditioner composition and the second piece or section of absorbent material and consecutive pieces or sections are immersed in:
- water; or
- water comprising the same fabric conditioner composition, as used for the first piece of fabric, but at a different concentration; or
- water comprising the same concentration of fabric conditioning composition as for the first piece of fabric, but a different fabric conditioner composition;
- or left untreated.

Preferably, each piece or section of absorbent material is immersed for the same period of time.

Most preferably, the second and consecutive piece or section of absorbent material are immersed in water or water comprising a different fabric conditioning composition at the same concentration.

### Use of the method

The method of the present invention may be used to demonstrate that a fabric conditioner neutralises laundry detergent residues. In particular, the neutralising effect of the fabric conditioner is associated with the reduction of skin irritancy caused by a laundry detergent.

### Examples

In examples of methods according to the invention, the neutralising effect of a fabric conditioner vs. no fabric conditioner was assessed.

### Example 1

- Two identical pieces of white polyester, of roughly 20 x 20 cm were used.
- Both pieces of polyester were simultaneously immersed in the same bowl of laundry detergent (6g of laundry detergent per litre of water, detergent comprising; Non-Ionic 7 w.t.%, SLES-2EO 1.5 w.t.%, LAS 5.8 w.t.% and) and agitated for about 5 seconds.
- Both pieces of polyester were removed and squeezed to remove excess water.
- Simultaneously one piece of absorbent material was immersed in a bowl of water and the second piece of absorbent material was immersed in a bowl of water comprising a fabric conditioner (50g of fabric conditioner per litre of water, fabric conditioner comprising 4 w.t.% PH-TEAQ).

- Both pieces of polyester were simultaneously agitated for about 5 seconds.
- Both pieces of polyester were removed and squeezed to remove excess water.
- Simultaneously the two pieces of polyester were immersed in separate bowls, each bowl containing 1 litre of water and 0.5ml of 1% toluidine solution.
- Both pieces of polyester were simultaneously agitated for about 5 seconds.
- Both pieces of polyester were removed and squeezed to remove excess water.
- The pieces of polyester where then placed on a black background and visually compared. The pieces of polyester immersed in a fabric conditioner had significantly less dye, indicating the neutralisation of residues irritating to the skin.

### Example 2

- A rectangular piece of fabric was immersed in water comprising a detergent composition. It was agitated and remained in the solution for about 15 seconds.
- The fabric was removed and rung to remove excess liquid.
- Two containers were placed side by side. The first contained water comprising a fabric conditioner composition and the second contained water.
- The rectangular piece of fabric was placed half in the first container and half in the second container and left for about 20 seconds.
- During the 20 seconds a line was drawn across section of the rectangular fabric bridging between the two containers to indicate the two halves.
- The fabric was carefully removed to avoid contamination between the two halves of the fabric. Each side was individually squeezed to remove excess liquid.
- The piece of fabric was immersed in a bowl of aqueous toluidine dye solution for about 10 seconds.
- The piece of fabric was removed from the dye solution and placed on paper towel, paper towel was placed on top and patted to remove excess liquid.
- A visual comparison was made between the two halves of the rectangular fabric. The half which had been submerged in water was significantly bluer than the half submerged in water comprising fabric conditioner. This demonstrates that the fabric conditioner neutralised the detergent residues.

### Example 3

- A piece of fabric was immersed in water comprising a detergent composition. It was agitated and remained in the solution for about 8 seconds.
- The fabric was removed and rung to remove excess liquid.
- The fabric was then cut in half.
- The first half was attached to an upright board using a bulldog clip.
- The second half was immersed in water comprising a fabric conditioner and agitated for about 10 seconds.
- The second half was removed and squeezed to removed excess liquid.
- The second half was then attached to the upright board next to the first half, also using a bulldog clip.
- The two pieces of fabric where sprayed with equal quantities of aqueous toluidine dye solution.
- The resulting colour of the two pieces of fabric was assessed visually. The piece which had only been treated with detergent solution was significantly bluer than the piece which had been immersed in water comprising fabric conditioner. This demonstrates that the fabric conditioner neutralised the detergent residues.

## Claims

1. A method of assessing the neutralising effect of a fabric conditioner, the method comprising the steps of:
a) Immersing a first piece or section of absorbent material in water comprising a laundry detergent composition, wherein the detergent composition comprises anionic surfactant;
b) Immersing the first piece or section of absorbent material in water comprising a fabric conditioning composition wherein the fabric conditioning composition comprises a cationic surfactant;
c) Applying a cationic dye to the absorbent material; and
d) Assessing the colour of the absorbent material
Wherein the fabric conditioner neutralises detergent residues.

2. A method according to claim 1, wherein a first piece or section of absorbent material is compared to a second piece or section of absorbent material, the second piece or section of absorbent material being treated following the steps of:
a) Immersing in water comprising a laundry detergent composition;
b) Optionally immersing in water or water comprising a fabric conditioning composition;
c) Applying a cationic dye to the absorbent material; and
d) Assessing the colour of the absorbent material.

3. A method according to claim 2, wherein the concentration of laundry detergent composition is constant for both the first and the second pieces or sections of absorbent material.

4. A method according to claim 2, wherein the first and the second piece or section of absorbent material are treated with the same laundry detergent composition.

5. A method according to claim 2, wherein the first and the second pieces or sections of absorbent material are the same absorbent material.

6. A method according to claim 2, wherein two pieces of absorbent material are used and the difference between the height of the two pieces of absorbent material is less than 10cm, the difference between the width of the two pieces of absorbent material is less than 10cm and where relevant the difference between the depth of the two pieces of absorbent material is less than 10cm.

7. A method according to claim 2, wherein step b) comprises rinsing the second piece or section of absorbent material in:
- water;
- water comprising the same fabric conditioner composition, as used for the first piece of fabric, but at a different concentration; or
- water comprising the same concentration of fabric conditioning composition as for the first piece of fabric, but a different fabric conditioner composition.

8. A method according to any preceding claim, wherein the laundry detergent composition comprises anionic and non-ionic surfactants.

9. A method according to any preceding claim, wherein the fabric conditioning composition comprises a quaternary ammonium compound.

10. A method according to any preceding claim, wherein the cationic dye is in an aqueous solution, the cationic dye being in a concentration of 1 x 10⁻⁹ to 1 x 10⁻³ w.t. % of the aqueous solution.

11. A method according to any preceding claim, wherein the piece or pieces of absorbent material are a synthetic material.

12. A method according to any preceding claim, wherein the piece or pieces of absorbent material are in the shape of an item of clothing.

13. A method according to any preceding claim, wherein the piece or pieces of absorbent materials are selected from a sheet of acrylic, polyester or nylon or a 3-dimensional poly-urethane sponge.

14. A method according to any preceding claim, wherein the assessment of the colour is a visual assessment.

15. Use of the method according to any preceding claim, for demonstrating the neutralising effect of a fabric conditioner in relation to the residues from a laundry detergent.

## Patentansprüche

1. Verfahren zur Bewertung der neutralisierenden Wirkung eines Weichspülers, wobei das Verfahren die folgenden Schritte umfasst:
a) Tauchen eines ersten Stücks oder Abschnitts von absorbierendem Material in Wasser, umfassend eine Waschmittelzusammensetzung, wobei die Waschmittelzusammensetzung anionisches Tensid umfasst;
b) Tauchen des ersten Stücks oder Abschnitts von absorbierendem Material in Wasser, umfassend eine Stoffkonditionierzusammensetzung, wobei die Stoffkonditionierzusammensetzung ein kationisches Tensid umfasst;
c) Aufbringen eines kationischen Farbstoffs auf das absorbierende Material; und
d) Bewerten der Farbe des absorbierenden Materials,
wobei der Weichspüler Waschmittelrückstände neutralisiert.

2. Verfahren nach Anspruch 1, wobei ein erstes Stück oder ein erster Abschnitt von absorbierendem Material mit einem zweiten Stück oder Abschnitt von absorbierendem Material verglichen wird, wobei das zweite Stück oder der zweite Abschnitt von absorbierendem Material nach den folgenden Schritten behandelt wird:
a) Tauchen in Wasser, umfassend eine Waschmittelzusammensetzung;
b) gegebenenfalls Tauchen in Wasser oder Wasser, umfassend eine Stoffkonditionierzusammensetzung;
c) Aufbringen eines kationischen Farbstoffs auf das absorbierende Material; und
d) Bewerten der Farbe des absorbierenden Materials.

3. Verfahren nach Anspruch 2, wobei die Konzentration der Waschmittelzusammensetzung sowohl für das erste als auch für das zweite Stück oder sowohl für den ersten als auch den zweiten Abschnitt von absorbierendem Material konstant ist.

4. Verfahren nach Anspruch 2, wobei das erste und das zweite Stück oder der erste und der zweite Abschnitt von absorbierendem Material mit der gleichen Waschmittelzusammensetzung behandelt werden.

5. Verfahren nach Anspruch 2, wobei das erste und das zweite Stück oder der erste und der zweite Abschnitt von absorbierendem Material das gleiche absorbierende Material sind.

6. Verfahren nach Anspruch 2, wobei zwei Stücke absorbierenden Materials verwendet werden und der Unterschied zwischen der Höhe der beiden Stücke absorbierenden Materials weniger als 10 cm beträgt, wobei der Unterschied zwischen der Breite der beiden Stücke absorbierenden Materials weniger als 10 cm beträgt und, sofern dies relevant ist, der Unterschied zwischen der Tiefe der beiden Stücke absorbierenden Materials weniger als 10 cm beträgt.

7. Verfahren nach Anspruch 2, wobei Schritt b) das Spülen des zweiten Stücks oder Abschnitts von absorbierendem Material in:
- Wasser;
- Wasser, umfassend die gleiche Stoffkonditionierzusammensetzung wie für das erste Stück Stoff verwendet, aber in einer anderen Konzentration; oder
- Wasser, umfassend die gleiche Konzentration an Stoffkonditionierzusammensetzung wie für das erste Stück Stoff, aber mit einer anderen Stoffkonditionierzusammensetzung,
umfasst.

8. Verfahren nach irgendeinem vorhergehenden Anspruch, wobei die Waschmittelzusammensetzung anionische und nichtionische Tenside umfasst.

9. Verfahren nach irgendeinem vorhergehenden Anspruch, wobei die Stoffkonditionierzusammensetzung eine quaternäre Ammoniumverbindung umfasst.

10. Verfahren nach irgendeinem vorhergehenden Anspruch, wobei sich der kationische Farbstoff in einer wässrigen Lösung befindet, wobei der kationische Farbstoff in einer Konzentration von 1 x 10⁻⁹ bis 1 x 10⁻³ Gew.-% der wässrigen Lösung vorliegt.

11. Verfahren nach irgendeinem vorhergehenden Anspruch, wobei das Stück oder die Stücke von absorbierendem Material ein synthetisches Material sind.

12. Verfahren nach irgendeinem vorhergehenden Anspruch, wobei das Stück oder die Stücke von absorbierendem Material die Form eines Kleidungsstücks aufweisen.

13. Verfahren nach irgendeinem vorhergehenden Anspruch, wobei das Stück oder die Stücke von absorbierenden Materialien aus einem Flächenkörper aus Acryl, Polyester oder Nylon oder einem 3-dimensionalen Polyurethanschwamm ausgewählt sind.

14. Verfahren nach irgendeinem vorhergehenden Anspruch, wobei die Bewertung der Farbe eine visuelle Bewertung ist.

15. Verwendung des Verfahrens nach irgendeinem vorhergehenden Anspruch zum Nachweis der neutralisierenden Wirkung eines Weichspülers in Bezug auf die Rückstände von einem Waschmittel.

## Revendications

1. Procédé analysant l'effet neutralisant d'un assouplissant de textile, le procédé comprenant les étapes de :
a) immersion d'une première pièce ou section de matériau absorbant dans de l'eau comprenant une composition de détergent de lessive, dans lequel la composition de détergent comprend un tensioactif anionique ;
b) immersion de la première pièce ou section de matériau absorbant dans de l'eau comprenant une composition d'assouplissant de textile, dans lequel la composition d'assouplissant de textile comprend un tensioactif cationique ;
c) application d'un colorant cationique au matériau absorbant ; et
d) analyse de la couleur du matériau absorbant
dans lequel l'assouplissant de textile neutralise des résidus de détergent.

2. Procédé selon la revendication 1, dans lequel une première pièce ou section de matériau absorbant est comparée à une seconde pièce ou section de matériau absorbant, la seconde pièce ou section de matériau absorbant étant traitée suivant les étapes de :
a) immersion dans de l'eau comprenant une composition de détergent de lavage ;
b) éventuellement immersion dans de l'eau ou dans de l'eau comprenant une composition d'assouplissant de textile ;
c) application d'un colorant cationique au matériau absorbant ; et
d) analyse de la couleur du matériau absorbant.

3. Procédé selon la revendication 2, dans lequel la concentration de composition de détergent de lessive est constante à la fois pour les première et seconde pièces ou sections de matériau absorbant.

4. Procédé selon la revendication 2, dans lequel les première et seconde pièces ou sections de matériau absorbant sont traitées avec la même composition de détergent de lessive.

5. Procédé selon la revendication 2, dans lequel les première et la seconde pièces ou sections de matériau absorbant sont le même matériau absorbant.

6. Procédé selon la revendication 2, dans lequel deux pièces de matériau absorbant sont utilisées et la différence entre la hauteur des deux pièces de matériau absorbant est inférieure à 10 cm, la différence entre la largeur des deux pièces de matériau absorbant est inférieure à 10 cm et le cas échéant la différence entre la profondeur des deux pièces de matériau absorbant est inférieure à 10 cm.

7. Procédé selon la revendication 2, dans lequel l'étape b) comprend le rinçage de la seconde pièce ou section de matériau absorbant dans :
- de l'eau ;
- de l'eau comprenant la même composition d'assouplissant de textile, que celle utilisée pour la première pièce de textile, mais à une concentration différente ; ou
- de l'eau comprenant la même concentration de composition d'assouplissant de textile que pour la première pièce de textile, mais une composition d'assouplissant de textile différente.

8. Procédé selon l'une quelconque des revendications précédentes, dans lequel la composition de détergent de lessive comprend des tensioactifs anioniques et non-ioniques.

9. Procédé selon l'une quelconque des revendications précédentes, dans lequel la composition d'assouplissant de textile comprend un composé d'ammonium quaternaire.

10. Procédé selon l'une quelconque des revendications précédentes, dans lequel le colorant cationique est dans une solution aqueuse, le colorant cationique étant dans une concentration de 1 x 10⁻⁹ à 1 x 10⁻³ % en masse de la solution aqueuse.

11. Procédé selon l'une quelconque des revendications précédentes, dans lequel la pièce ou les pièces de matériau absorbant sont un matériau synthétique.

12. Procédé selon l'une quelconque des revendications précédentes, dans lequel la pièce ou les pièces de matériau absorbant sont dans la forme d'un vêtement.

13. Procédé selon l'une quelconque des revendications précédentes, dans lequel la pièce ou les pièces de matériaux absorbants sont choisies parmi une feuille d'acrylique, polyester ou Nylon ou une éponge de poly-uréthane 3-dimensionnelle.

14. Procédé selon l'une quelconque des revendications précédentes, dans lequel l'analyse de la couleur est une analyse visuelle.

15. Utilisation du procédé selon l'une quelconque des revendications précédentes, pour démontrer l'effet neutralisant d'un assouplissant de textile en relation avec les résidus d'un détergent de lessive.
